(19) Europäisches Patentamt
European Patent Office
Office européen des brevets

(11) **EP 2 764 236 B1**

(12) **EUROPEAN PATENT SPECIFICATION**

(45) Date of publication and mention
of the grant of the patent:
**13.12.2017 Bulletin 2017/50**

(21) Application number: **12788279.3**

(22) Date of filing: **02.10.2012**

(51) Int Cl.:
*F03B 13/20* (2006.01)   *F03G 7/08* (2006.01)
*F03B 13/18* (2006.01)

(86) International application number:
**PCT/IB2012/055268**

(87) International publication number:
**WO 2013/050924 (11.04.2013 Gazette 2013/15)**

(54) **SYSTEM FOR GENERATING ELECTRICAL ENERGY FROM SEA WAVES**

SYSTEM ZUR ERZEUGUNG ELEKTRISCHER ENERGIE AUS MEERESWELLEN

SYSTÈME PERMETTANT LA GÉNÉRATION D'ÉNERGIE ÉLECTRIQUE À PARTIR DE VAGUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.10.2011  IT TO20110879**

(43) Date of publication of application:
**13.08.2014 Bulletin 2014/33**

(73) Proprietor: **Wave for Energy S.r.l.
10146 Torino (IT)**

(72) Inventor: **ORLANDO, Vincenzo
I-10146 Torino (IT)**

(74) Representative: **Frontoni, Stefano
c/o Buzzi, Notaro & Antonielli d'Oulx S.r.l.
Via Maria Vittoria, 18
10123 Torino (IT)**

(56) References cited:
**EP-A1- 1 384 824      GB-A- 2 409 898
US-A- 4 352 023      US-A1- 2009 322 080
US-B1- 7 375 436**

## Description

The present invention relates to a system for generating electrical energy from sea waves, of the type comprising a floating body and a gyroscope structure set thereon and comprising:

- a first frame mounted so that it can turn with respect to the floating body about a first axis of rotation; and
- a rotor, which is mounted so that it can turn about a second axis of rotation, is carried by the first frame, and is substantially orthogonal to said first axis;
- said system further comprising electric-generator means operatively connected to said first frame for generating electrical energy as a result of rotation of said first frame about said first axis.

In known systems of the type described above, the first frame moves according to a movement of oscillation that is supplied by the gyroscopic force induced by the combination of the motion of roll (and/or pitch) of the floating body and of the motion of rotation of the rotor about its own axis. The aforesaid movement of oscillation of the first frame is exploited by the electric-generator means for the production of electrical energy. In some solutions of a known type, the generator means are directly connected to the first frame to generate an a.c. signal, whilst in other solutions, between the first frame and the generator means, mechanical transmission means are provided designed to connect operatively together the first frame and the generator means only in one direction of rotation of the frame in such a way that the generator means will generate a variable-current signal but with constant sign. An example of the latter type of known solution is described in the U.S. patent No. US4352023. Analogous solution is described in the U.S. patent application No. 2009/0322080.

The object of the present invention is to provide a system that is able to operate with an operating efficiency that is higher than those of the known systems indicated above. Said object is achieved via a gyroscope structure according to claim 1 and a procedure for control of said structure according to claim 7. The claims form an integral part of the technical teaching provided herein in relation to the invention.

Further characteristics and advantages of the invention will emerge from the ensuing description with reference to the annexed drawings, which are provided purely by way of non-limiting example and in which:

- Figure 1 is a perspective view of an embodiment of the device described herein;
- Figure 2 is a side view of the system of Figure 1;
- Figure 3 is a perspective view of a second embodiment of the system of Figure 1;
- Figures 4a-4f illustrate the system of Figure 1 in successive operating steps;
- Figures 5a-5f are schematic illustrations of operating sequences of the system;
- Figure 6 illustrates an example of control circuit for the system of Figure 1; and
- Figure 7 represents a diagram that sets in comparison the electric power $P_{II}$ supplied by the system described herein and the electric power $P_I$ supplied by an equivalent generator system of a known type.

In the ensuing description, various specific details are illustrated aimed at an in-depth understanding of the embodiments. The embodiments may be provided without one or more of the specific details, or with other methods, components, materials, etc. In other cases, known structures, materials, or operations have not been described in detail so that the various aspects of the embodiments will not be obscured.

The references used herein are provided only for convenience and hence do not define the sphere of protection of the embodiments.

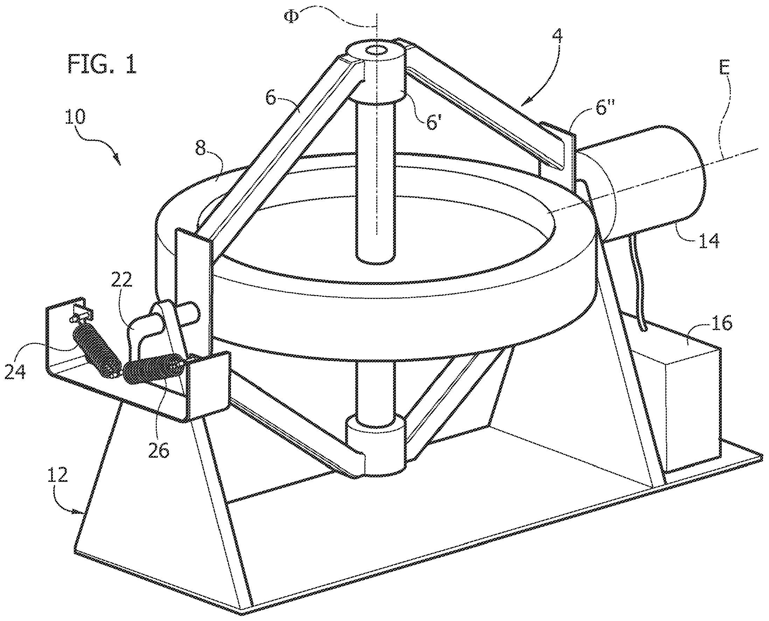

With reference to Figures 1 to 3, designated by the reference number 10 is a system for generating electrical energy from sea waves. It should be noted that the figures illustrate the system 10 in an altogether schematic way in order to enable an immediate understanding of its most important features that distinguish it from systems of a known type. It is consequently evident that the embodiment of the system may even vary from the one illustrated herein according to the processes, materials, and/or means that the person skilled in the branch will deem most appropriate to adopt for production of the system.

In general, the system 10 comprises a floating body (not shown) and a gyroscope structure 4 set thereon and comprising:

- a first frame 6 mounted so that it can turn with respect to the floating body about a first axis E;
- a rotor 8, which is mounted so that it can turn about a second axis of rotation $\Phi$, is carried by said first frame, and is substantially orthogonal to said first axis. In various preferred embodiments, as in the one illustrated, the second axis of rotation is contained in a plane substantially orthogonal to the plane of floating of the floating body.

In the embodiment illustrated in the figures, the first frame 6 is directly mounted on a supporting structure 12, which is to be rigidly connected to the floating body; in said embodiment, the gyroscope structure 12 consequently has just one degree of freedom. In alternative embodiments, the first frame can, instead, be mounted - so that it can turn about the aforesaid first axis - on a second frame, which is in turn mounted so that it can turn on the aforesaid supporting structure about a third axis of rotation orthogonal to the aforesaid first axis. Consequently, in said embodiment, the gyroscope structure has two degrees of freedom.

As is evident to a person skilled in the art, the gyroscope structure with one degree of freedom - of which, as has already been said, the figures illustrate just an example - enables exploitation only of the oscillations of the floating body that occur about an axis orthogonal to the axis of rotation of the first frame, and not also, instead, of the oscillations that occur about an axis parallel thereto. Consequently, in preferred embodiments, the floating body has, on the outer part of its hull, drift elements designed to orient the floating body in such a way that, during operation, the axis of the first frame is kept parallel to the direction of advance of the waves (namely, the axis of oscillation of the floating body will remain orthogonal to the axis of the first frame).

In various embodiments, as in the one illustrated, the first frame 6 has a structure substantially resembling a picture frame defining first portions 6' for rotatable coupling, about the second axis, with the shaft of the rotor, and second portions 6" for rotatable coupling, about the first axis, with the aforesaid supporting structure 12.

In various embodiments, as in the one illustrated, the system comprises electric-generator means 14 connected to the first frame so as to exploit the kinetic energy associated thereto for generating electrical energy. Said means will not be described herein in detail in so far as they are already widely known in the relevant art. For the reasons that will be evident in what follows to a person skilled in the art, the electric-generator means used in the system described herein are preferably of the rotary type.

In various embodiments, as in the one illustrated, the system further comprises means 16 for storing the electrical energy produced, such as for example a set of batteries, which are electrically connected to the aforesaid generator means and are carried, for example, by the aforesaid supporting structure.

An important characteristic of the system described herein consists in the fact that it comprises actuator means designed to control rotation of the first frame about the first axis, as a function of its angular position in such a way that in operation the first frame will perform, about the first axis, complete rotations through 360°, in one and the same direction of rotation. As will be seen in what follows, said actuator means are designed to exert on the first frame a torque concordant or discordant with respect to the motion of rotation of the first frame, as a function of its angular position. In various embodiments, as in the one illustrated, said means are designed to control rotation of the first frame in such a way as to keep its velocity of rotation substantially constant, or in any case always in the same direction.

As will be seen in what follows, said actuator means may be completely mechanical actuator means or else may be a control unit provided for actuating an electric motor or else the generator means themselves, switched to an operating mode of a motor type so as to exert on the first frame a torque that is either concordant or discordant with respect to its motion of rotation, as a function of the angular position of the first frame itself.

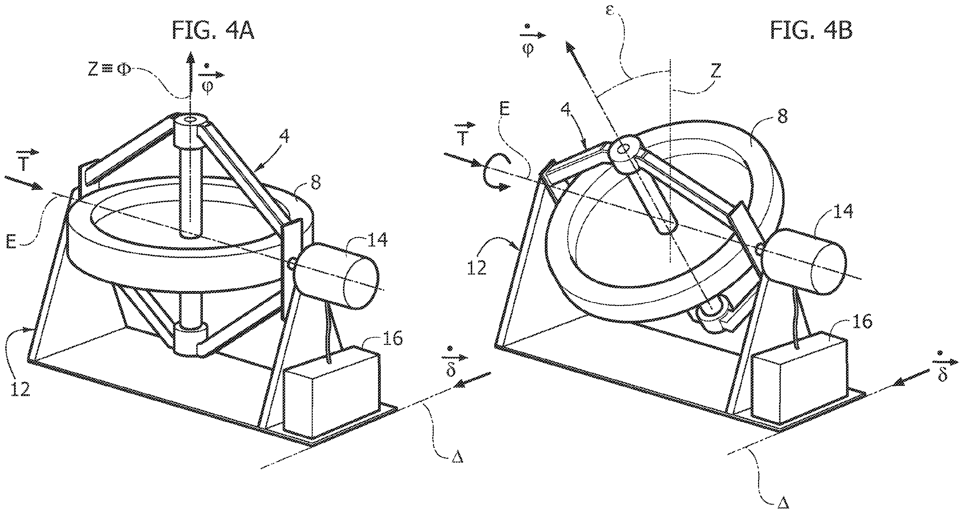

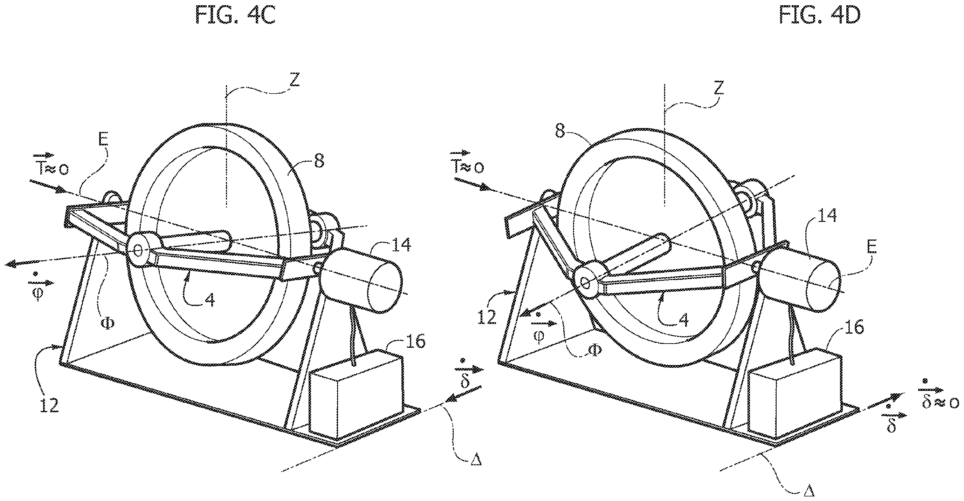

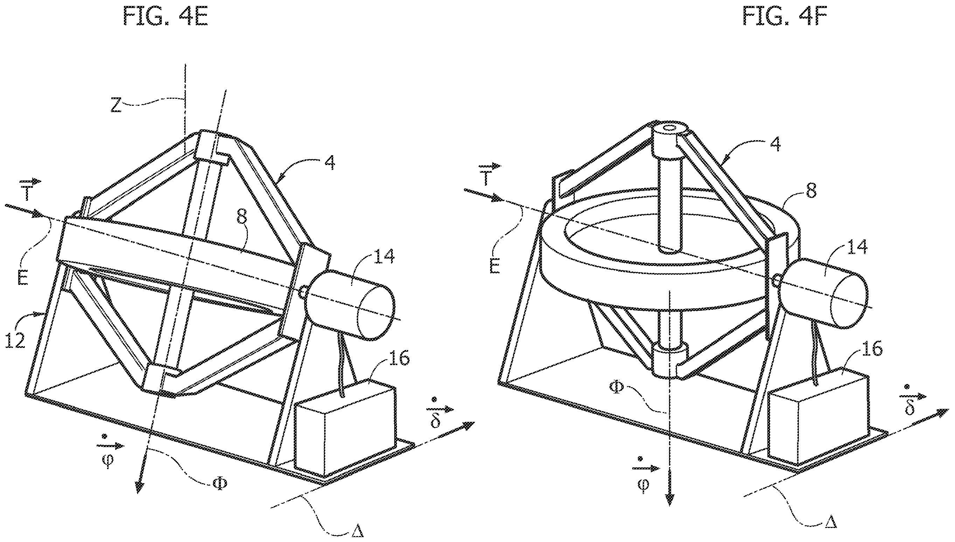

In order to render as clear as possible to a person skilled in the art the criteria underlying operation of said actuator means, described in brief hereinafter, with reference to Figures 4, are the physical dynamics that are set up during operation of the system.

In particular, Figures 4 illustrate an example of operation in which the floating body is subject to a motion of pitch about an axis Δ (represented in the figures), orthogonal to the axis of rotation E of the first frame. In said example of operation, the axis Δ and the axis E remain fixed in position, whereas the axis φ rotates together with the first frame as a result of the gyroscopic torque induced by the combination of the motion of pitch of the floating body, about the axis Δ, and of the motion of rotation of the rotor, about the axis φ.

As is known to the person skilled in the branch, the gyroscopic torque is given by the following equations:

$$\vec{T} = I \cdot \dot{\vec{\varphi}} \times \dot{\vec{\delta}}$$

$$T = I \cdot (\dot{\varphi} \cdot \cos\varepsilon) \cdot \dot{\delta}$$

where:

$\vec{T}, T$ are the vector and respective modulus of the gyroscopic torque;

I is the gyroscopic moment of inertia;

$\dot{\vec{\varphi}}$ , $\dot{\varphi}$ are the vector and respective modulus of the angular velocity of the rotor about the second axis $\phi$;

$\dot{\vec{\delta}}$ , $\dot{\delta}$ are the vector and respective modulus of the angular velocity of the floating body about the axis Δ; and

$\varepsilon$ is the angle identified between the axis $\phi$ and the axis Z, the latter being the axis orthogonal to the axis E and to the axis Δ (see Figure 4b).

As is evident from said equations, the gyroscopic torque T depends upon the vector of the velocity of oscillation of the floating body (vector $\dot{\vec{\delta}}$ ) and upon the vector of the velocity of rotation of the rotor (vector $\dot{\vec{\varphi}}$ ), specifically upon the component of said vector orthogonal to the vector $\dot{\vec{\delta}}$ , said component being given by $\dot{\varphi} \times \cos\varepsilon$, and thus varying, given the same modulus $\dot{\varphi}$, as a function of the angular position of the vector $\dot{\vec{\varphi}}$ .

Represented in Figures 4 are both of the vectors $\dot{\vec{\delta}}$ and $\dot{\vec{\varphi}}$ , and the gyroscopic torque $\vec{T}$. As may be seen in said figures, in operation the rotor rotates always in one and the same direction with respect to the first frame (in a clockwise direction as viewed in Figure 4a and in a counterclockwise direction as viewed in Figure 4b).

Figure 4a illustrates an instant at which the floating body is moving at the maximum velocity about the axis Δ, in a counterclockwise direction, and the axis φ has assumed a condition orthogonal to the axis Δ. In said condition, the gyroscopic torque $\vec{T}$ is in a counterclockwise direction and assumes a maximum value in so far as the velocity of oscillation of the floating body is maximum; i.e., the modulus of the vector $\dot{\vec{\delta}}$ is maximum, and the component $\dot{\vec{\varphi}} \times \cos \varepsilon$ is also maximum. The gyroscopic torque $\vec{T}$ thus causes rotation of the first frame - i.e., the axis of rotation φ - about the axis E, in a counterclockwise direction.

Figure 4b illustrates a step in which the floating body continues to oscillate in a counterclockwise direction about the axis Δ, and the axis φ rotates about the axis E in a counterclockwise direction, pushed by the gyroscopic torque $\vec{T}$.

Figure 4c illustrates a step in which the body 2 is close to reversal of the motion from the counterclockwise direction to the clockwise direction, and the axis of rotation φ is almost parallel to the axis Δ. In said condition, the gyroscopic torque is substantially zero in so far as the velocity of oscillation of the floating body is almost zero - by now close to reversal of the motion - and the component $\dot{\varphi} \times \cos \varepsilon$ of the vector $\dot{\vec{\varphi}}$ is likewise approximately zero. Between the step of Figure 4b and the step of Figure 4c the gyroscopic torque $\vec{T}$ decreases, and the axis of rotation φ continues to rotate in a counterclockwise direction pushed by said torque and by the inertia of the system. The gyroscopic force becomes zero when the axis φ is brought into a condition of parallelism with the axis Δ.

Figure 4d illustrates a step in which the floating body has only just reversed its motion of oscillation and now rotates in a clockwise direction (see in this connection the vector $\dot{\vec{\delta}}$ ), whereas the axis of rotation φ turning in a counterclockwise direction has only just exceeded the condition of parallelism with the axis Δ. As may be seen from a comparison between Figures 4c and 4d, in the condition of Figure 4d the vector $\dot{\vec{\delta}}$ and the vector $\dot{\vec{\varphi}}$ have both a sense that is reversed - i.e., the sign of the velocity $\dot{\delta}$ and of the component $\dot{\varphi} \times \cos \varepsilon$ is in both cases reversed - with respect to the condition illustrated in Figure 4c. In view of the equations given above, the gyroscopic torque $T$ consequently continues to have a counterclockwise direction and hence act to cause the axis of rotation φ to turn in said direction. In the step of Figure 4d, the gyroscopic torque is in any case still practically zero for the same reasons indicated above with reference to Figure 4c.

Between the step of Figure 4d and the step of Figure 4e the velocity of oscillation of the floating body, which is now in a clockwise direction, increases, just as the component $\dot{\varphi} \times \cos \varepsilon$ of the vector $\dot{\vec{\varphi}}$ increases as a result of the approach to the condition of orthogonality with respect to the vector $\dot{\vec{\delta}}$ by the vector $\dot{\vec{\varphi}}$. The gyroscopic torque $\vec{T}$, which continues to be in a counterclockwise direction, consequently increases, until it again reaches a maximum in the step of Figure 4f, where the velocity $\dot{\delta}$ and the component $\dot{\varphi} \times \cos \varepsilon$ both assume a maximum value. Between the step of Figure 4f and the step of Figure 4a, the operation is repeated exactly as has just been described.

As has been seen, in the steps illustrated above, the gyroscopic torque $\vec{T}$ is such as to act always in the same direction. It is thus possible to envisage operation of the system in which a gyroscopic torque is generated that, within each cycle of oscillation of the floating body, will produce as a whole useful work always and only in the same direction of rotation, thus causing rotation of the first frame always and only in said direction. Said modality of operation illustrated above brings with it the advantage of optimal exploitation of the sea waves; in particular, in the case where, as in the example illustrated in Figures 4, the gyroscopic torque $\vec{T}$ is kept always concordant with the motion of rotation of the first frame, it is found to perform only useful work, thus enabling total exploitation of the mechanical energy transmitted from the waves to the floating body.

In this context, the actuator means referred to above have the function of guaranteeing said mode of operation by causing the motion of rotation of the first frame to be synchronized with the motion of pitch - and/or roll - of the floating body, so that, as has been mentioned above, within each cycle of oscillation of the floating body, the induced gyroscopic torque $\vec{T}$ will produce as a whole useful work always and only in the same direction of rotation. As will be seen in what follows, for said purpose the actuator means "expend" a part of the energy of the system to exert on the first frame torques that are concordant or discordant with respect to the motion of rotation of the first frame, said energy being, however, returned to the system - with some reduction on account of the losses due to friction - in the form of useful work by the gyroscopic torque itself.

Figure 1 illustrates an embodiment of the system in which the actuator means are constituted by mechanical means. In various embodiments, as in the one illustrated, said means comprise a crank 22 connected in rotation to the first frame 6, pivoted to the ends of which are the respective ends 24', 26' of two traction springs 24, 26 set at the opposite sides of the crank. The opposite ends 24'', 26" of said springs are in turn pivoted about respective axes parallel to the crank axis, which lie in one and the same plane that also contains the crank axis, in respective positions that are opposite to one another and equidistant from said axis.

As has been mentioned above, said means have the function of synchronizing the motion of rotation of the first frame with the motion of pitch of the floating body, so that, within each cycle of oscillation of the floating body, the induced gyroscopic torque $\vec{T}$ will be as a whole such as to produce useful work always and only in the same direction of rotation.

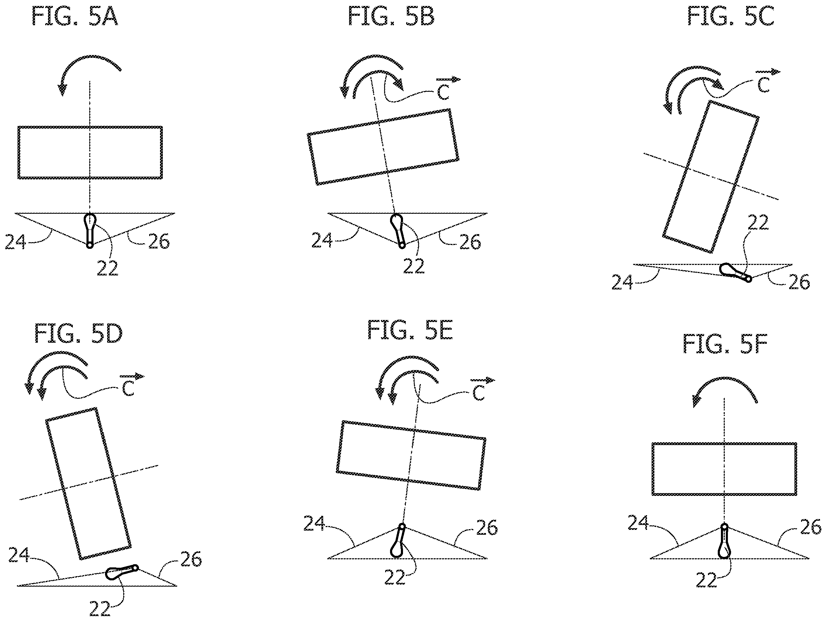

In particular, the means illustrated in Figure 1 are designed to obtain a cycle of operation corresponding to the one schematically illustrated in Figures 4. To render operation thereof evident, Figures 5 illustrate the configuration assumed by the springs 24, 26 in the various steps shown in Figures 4.

As illustrated in Figure 5a, in the step of Figure 4a the springs are in a mutual configuration whereby their resultant action is zero.

In the step of Figure 4b, the springs assume a configuration whereby there is instead determined a torque $\vec{C}$ on the crank, which is discordant with respect to the motion of rotation of the axis $\phi$, and consequently acts to brake said motion (see Figure 5b). Between the step of Figure 4b and the step of Figure 4c, the torque determined by the resultant action of the springs is maintained discordant with respect to the motion of rotation of the axis $\phi$ (see Figures 5b and 5c), but starts to decrease as a result of the reduction of the arm with which the resultant force of the springs acts on the crank.

In the steps of Figures 4c and 4d, the resultant action of the springs determines a torque that is almost zero in so far as the arm with which their resultant force acts on the crank is practically zero (see Figures 5c and 5d); it should, however, be noted that in the step of Figure 4c said torque is discordant with respect to the motion of rotation of the axis $\phi$, whereas in the step of Figure 4d it is concordant with said motion.

Between the step of Figure 4d and the step of Figure 4f, the torque determined by the resultant action of the springs is maintained concordant with the motion of rotation of the axis $\phi$ (see Figures 5d and 5e), and first increases, as a result of the increase of the arm with which the resultant force of the springs acts on the crank, and then starts to decrease as it approaches the condition of Figure 4f, where the resultant action of the springs again becomes zero (see Figure 5f). Between the step of Figure 4f and the step of Figure 4a, the operation of the springs 24 and 26 is repeated, as has just been described.

As has been seen above, during rotation of the axis $\phi$ i.e., during rotation of the first frame, the springs act first so as to oppose said motion and then so as to sustain it. In the light of what has been illustrated with reference to Figures 4, said interventions have in particular the purpose of causing the axis of rotation $\phi$ to reach the condition of parallelism with respect to the axis $\Delta$ only upon reversal of motion by the floating body when the floating body is still substantially stationary, so that, as has been seen previously, the vector $\dot{\vec{\varphi}}$ and the vector $\dot{\vec{\delta}}$ change sense - i.e., the velocity $\dot{\delta}$ and the component $\dot{\varphi} \times \cos \varepsilon$ change sign - substantially at the same instant. In this way, the gyroscopic torque $\vec{T}$ never changes sense: the first frame is hence made to rotate always and only in one and the same direction of rotation, and the gyroscopic torque $\vec{T}$ only produces useful work. In various preferred embodiments, the actuator means are designed to control rotation of the first frame in such a way that its velocity remains substantially constant.

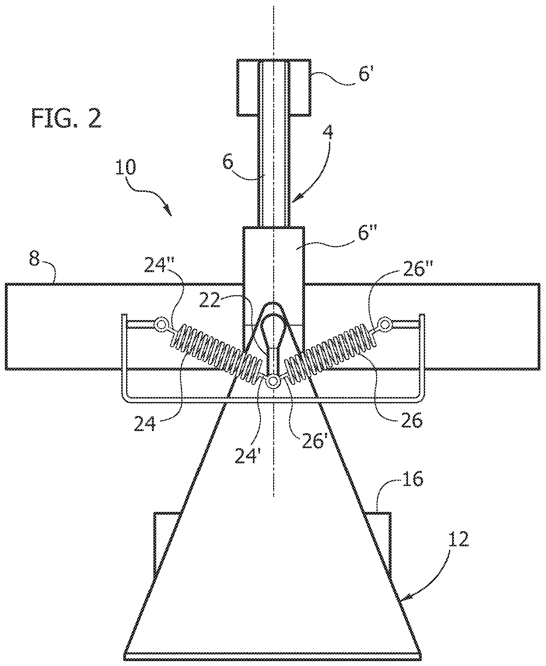

It is to be noted that said type of control can be provided also via mechanical means different from the ones illustrated in Figures 1 and 2, but in any case provided with elastic means for absorbing/supplying energy from/to the gyroscope structure, with a view to synchronizing it with the motion of oscillation of the floating body.

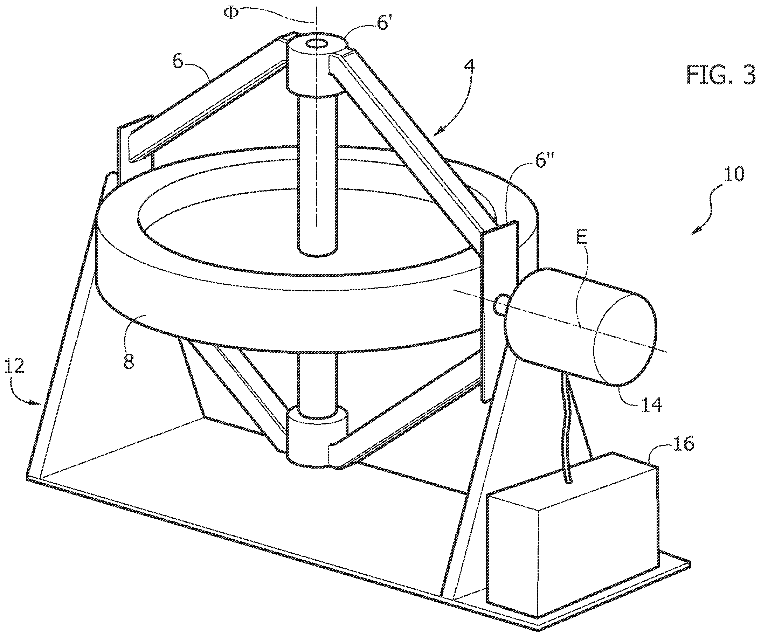

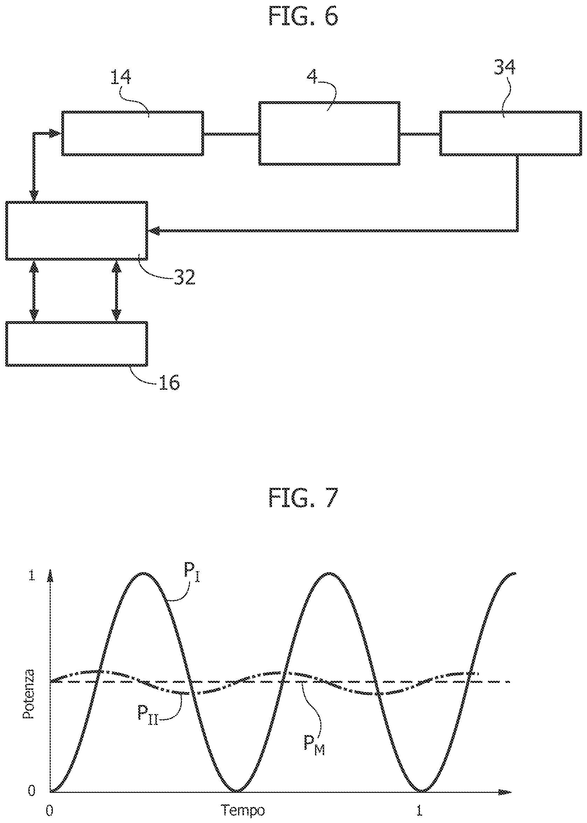

As mentioned previously, the control referred to above can be performed also via the electric-generator means themselves. Figure 3 illustrates an example of system according to said alternative embodiment. In said embodiment, in times and ways like the ones described above with reference to the springs of Figures 5, the generator means are driven by an electric motor, for generating on the first frame a torque concordant or discordant with respect to the motion of rotation of the first frame - and hence designed to oppose or to sustain the motion of rotation of the latter - as a function of its angular position. For said purpose, in various embodiments, as in the one illustrated in Figure 6, the system has a control circuit comprising a control unit 32, set between the generator means 14 and the battery 16, and a sensor 34 connected to the control unit and designed to detect the angular position of the first frame. The control unit is provided for switching into the operating mode of the generator means a motor operating mode as a function of the angular position of the first frame. In said alternative embodiment, it is obviously preferable to envisage that the generator means intervene only at specific intervals of the travel of rotation of the first frame, for a number of times depending upon the degree of the individual interventions instead of exerting a continuous action like the springs 24 and 26.

In general, it is to be noted that the action of control exerted by the actuator means of the system on the first frame may also vary from the one described above with reference to Figures 5 both in the times and in the modes of intervention. In this connection, the gyroscopic torque $\vec{T}$ does not necessarily have to remain always concordant with the motion of rotation of the first frame, but it can also, at certain moments, be discordant, provided, as mentioned previously, that within each cycle of oscillation of the floating body the induced gyroscopic torque $\vec{T}$ produces useful work only in one and the same direction of rotation so as to drive the first frame in rotation, i.e., the axis of rotation Φ always and only in the same direction. The person skilled in the branch may hence devise any control mode that, albeit departing from the example illustrated, is able to obtain such a result. For instance, it is possible to provide control modes in which the actuator means act on the first frame only with torques concordant to the motion of the first frame, or else only with discordant torques, or else with an alternation of concordant and discordant torques, which, however, differ - for example as regards times/duration of action, values, etc. - from those of the example illustrated. Furthermore, the actuator means themselves may differ from the ones illustrated above, it being possible to envisage in their place, or in addition thereto, any other actuator that is able to act on the first frame according to the criteria referred to above. For example, as mentioned above, it is possible to provide an electric motor proper, controlled by the aforesaid control unit, so that the generator means can always and only operate in order to produce electric power.

It is to be noted that in the examples illustrated above a system has been described that is to be used in areas of water characterized by a wave motion with a substantially constant cycle. The system is, in fact, pre-arranged for synchronizing with a single type of motion, which is a characteristic of the area in which the system will be used. As has been seen above, in said system the actions of the actuator means are set on the basis of the angular position alone of the first frame, since, as is evident to the person skilled in the art, within a sinusoidal motion with a substantially constant cycle, said position is directly correlated with the phase of the cycle of the wave motion so that by controlling said position to all effects the movement of the first frame is co-ordinated with respect to said motion. It is, however, possible to pre-arrange the system described herein also for uses in areas of water with variable wave motion. For this purpose, the system can envisage one or more acceleration sensors designed to detect the accelerations induced on the floating body by the wave motion, as likewise one or more position sensors, velocity sensors and/or torque sensors, and actuator means designed to control rotation of the first frame, not only as a function of the angular position of this, but also as a function of the signals produced by said sensors. In this way, the system may be synchronized also with variable wave motions. The criteria with which said actuator means act on the first frame remain in any case the same as the ones that have been described above.

As has been said previously, the system described herein can provide also a gyroscope structure with two degrees of freedom, comprising a first rotatable frame and a second rotatable frame. In said embodiment, by applying the same criteria as the ones highlighted above, it is possible to envisage that both of said frames, or else just one of these, will turn always and only in one and the same direction. As compared to the one previously illustrated, said embodiment affords the advantage of enabling exploitation both of the motion of pitch and of the motion of roll of the floating body.

As emerges from the above description, the system described herein envisages an operation in which the system expends energy for synchronizing with the action of the sea waves on the floating body, but by so doing is able to exploit in an optimal way the gyroscopic torques induced by said wave motion, reducing as much as possible the losses of energy due to the forces of inertia. The present applicant has in this connection found that the system described herein presents levels of operating efficiency that are higher than those obtained in systems of a known type. Moreover, as may be seen in Figure 7, the fact of operating at a substantially constant velocity - or in any case a velocity that never drops to zero values - enables the system to produce an electric power that oscillates around its overall mean value $P_M$, unlike the electric power produced by conventional systems, which oscillates, instead, between a minimum value equal to or lower than zero and a maximum value that is substantially twice the overall mean value. Consequently, with the system described herein there is the major advantage of being able to size the electrical parts on the basis of a value of power that is very close to its mean value, and not instead equal to twice that amount as occurs in known systems, and hence reduce, as compared to said known systems, the weight and space occupied by the electrical parts, thus saving also on the costs of production of the system.

Of course, without prejudice to the principle of the invention, the details of construction and the embodiments may vary, even significantly, with respect to what has been illustrated herein purely by way of non-limiting example, without thereby departing from the scope of the invention, as defined by the annexed claims.

**Claims**

1. A gyroscope structure (6) for generating electrical energy comprising:

> - a first frame (7), which can be mounted so that it can turn about a first axis of rotation (7'); and
> - a rotor (16) mounted so that it can turn on said first frame about a second axis of rotation (15') substantially orthogonal to said first axis;

> said structure having electric-generator means operatively connected to said first frame for generating electrical energy as a result of rotation of said first frame about said first axis (6),
> said structure being **characterized in that** it comprises actuator means designed to control rotation of said first frame about said first axis, as a function of the angular position of said first frame, in such a way that in operation said first frame will perform complete rotations through 360° about said first axis,

in one and the same direction of rotation.

2. The structure according to Claim 1, wherein said actuator means are designed to exert a torque on said first frame that is concordant or discordant with respect to said motion of rotation of said first frame, as a function of the angular position of said first frame.

3. The structure according to any one of Claims 1 to 2, wherein said actuator means are designed to control rotation of said first frame so that the gyroscopic torque ($\vec{T}$) induced by the structure will produce as a whole useful work always and only in the same direction of rotation.

4. The structure according to any one of the preceding Claims 1 to 3, wherein said actuator means are designed to control rotation of said first frame so that the gyroscopic torque ($\vec{T}$) induced by the structure is kept always and only concordant with the motion of rotation of the first frame.

5. The structure according to any one of Claims 1 to 4, wherein said actuator means comprise:

   - a control unit (32); and
   - a sensor (34) connected to said control unit and designed to detect the angular position of said first frame;

   said control unit being provided for switching the operating mode of said generator means into a motor operating mode, as a function of the angular position of said first frame, in such a way that said generator means will exert a torque on said first frame that is concordant or discordant with respect to said motion of rotation of said first frame, as a function of the angular position of said first frame.

6. The structure according to any one of Claims 1 to 4, wherein said actuator means comprise a crank (22) connected in rotation to the first frame, and two springs (24, 26) set at the opposite sides of the crank, said springs each having a first end (24', 26'), which is connected to said crank, and a second end (24", 26"), opposite to said first end, which is pivoted about a respective axis of oscillation parallel to the crank axis, wherein the respective axes of oscillation of the second ends of said springs lie in one and the same plane containing also the crank axis, in respective positions that are opposite to one another and equidistant from said crank axis.

7. A procedure for operating a gyroscope structure of the type comprising:

   - a first frame (7), which can be mounted so that it can turn about a first axis of rotation (7');

   - a rotor (16), which is mounted so that it can turn on said first frame about a second axis of rotation (15') substantially orthogonal to said first axis;

   said structure having electric-generator means operatively connected to said first frame for generating electrical energy as a result of rotation of said first frame about said first axis (6),
   said procedure being **characterized in that** it envisages control of rotation of said first frame about said first axis, as a function of the angular position of said first frame, so that said first frame will perform complete rotations through 360° about said first axis in one and the same direction of rotation.

8. A system for generating electrical energy from sea waves comprising a floating body and a gyroscope structure (4) set thereon according to any one of claims 1 to 6.

9. A system according to claim 8, wherein said actuator means are designed to synchronize the motion of rotation of the first frame with the motion of oscillation of the floating body, generated by the sea waves so that, within each cycle of oscillation of the floating body, the induced gyroscopic torque ($\vec{T}$) will produce as a whole useful work always and only in the same direction of rotation.

10. A system according to claim 8 or 9, wherein said actuator means are designed to synchronize the motion of rotation of the first frame with the motion of oscillation of the floating body generated by the sea waves so that the induced gyroscopic torque ($\vec{T}$) is kept always and only concordant with the motion of rotation of the first frame.

**Patentansprüche**

1. Kreiselstruktur (6) zur Erzeugung elektrischer Energie, mit:

   - einem ersten Rahmen (7), der so montierbar ist, dass er sich um eine erste Drehachse (7') drehen kann; und
   - einem Rotor (16), der so montiert ist, dass er an dem ersten Rahmen um eine zweite Drehachse (15'), die im Wesentlichen senkrecht zu der ersten Achse ist, drehbar ist;

   wobei die Struktur eine Elektrogeneratoreinrichtung aufweist, die funktionsmäßig mit dem ersten Rahmen zur Erzeugung elektrischer Energie als Folge einer Drehung des ersten Rahmens um die erste Achse (6) verbunden ist,
   wobei die Struktur **dadurch gekennzeichnet ist,**

**dass** sie eine Aktuatoreinrichtung aufweist, die ausgebildet ist, eine Drehung des ersten Rahmens um die erste Achse in Abhängigkeit von der Winkelposition des ersten Rahmens derart zu steuern, dass während des Betriebs der erste Rahmen vollständige Drehungen um 360° um die erste Achse in ein und derselben Drehrichtung ausführt.

2. Struktur nach Anspruch 1, wobei die Aktuatoreinrichtung ausgebildet ist, auf den ersten Rahmen ein Drehmoment, das in Bezug auf die Drehbewegung des ersten Rahmens gleichsinnig oder gegensinnig ist, in Abhängigkeit von der Winkelposition des ersten Rahmens auszuüben.

3. Struktur nach Anspruch 1 oder 2, wobei die Aktuatoreinrichtung ausgebildet ist, eine Drehung des ersten Rahmens derart zu steuern, dass das Kreisel-Drehmoment ($\vec{T}$), das von der Struktur hervorgerufen wird, insgesamt stets Nutzarbeit und ausschließlich in der gleichen Drehrichtung erzeugt.

4. Struktur nach einem der vorhergehenden Ansprüche 1 bis 3, wobei die Aktuatoreinrichtung ausgebildet ist, eine Drehung des ersten Rahmens derart zu steuern, dass das Kreisel-Drehmoment ($\vec{T}$), das von der Struktur hervorgerufen wird, stets ausschließlich gleichsinnig zu der Drehbewegung des ersten Rahmens gehalten wird.

5. Struktur nach einem der vorhergehenden Ansprüche 1 bis 4, wobei die Aktuatoreinrichtung umfasst:

   - eine Steuereinheit (32); und
   - einen Sensor (34), der mit der Steuereinheit verbunden und ausgebildet ist, die Winkelposition des ersten Rahmens zu erfassen;

   wobei die Steuereinheit vorgesehen ist, den Betriebsmodus der Generatoreinrichtung in einen Motorbetriebsmodus in Abhängigkeit der Winkelposition des ersten Rahmens derart umzuschalten, dass die Generatoreinrichtung ein Drehmoment, das gleichsinnig oder gegensinnig in Bezug auf die Drehbewegung des ersten Rahmens ist, auf den ersten Rahmen als eine Funktion der Winkelposition des ersten Rahmens ausübt.

6. Struktur nach einem der Ansprüche 1 bis 4, wobei die Aktuatoreinrichtung eine Kurbel (22), die drehend mit dem ersten Rahmen verbunden ist, und zwei Federn (24, 26) aufweist, die an gegenüberliegenden Seiten der Kurbel angebracht sind, wobei die Federn jeweils ein erstes Ende (24', 26'), das mit der Kurbel verbunden ist, und ein zweites Ende (24", 26") gegenüberliegend zu dem ersten Ende aufweisen, das um eine entsprechende Schwingungsachse parallel zu der Kurbelachse geschwenkt ist, wobei die jeweiligen Schwingungsachsen der zweiten Enden der Federn in ein und derselben Ebene, die auch die Kurbelachse enthält, an entsprechenden Positionen liegen, die einander gegenüberliegen und zu der Kurbelachse gleichen Abstand haben.

7. Verfahren zum Betreiben einer Kreiselstruktur von der Art, die umfasst:

   - einen ersten Rahmen (7), der so montierbar ist, dass er sich um eine erste Drehachse (7') drehen kann;
   - einen Rotor (16), der so montiert ist, dass er an dem ersten Rahmen um eine zweite Drehachse (15'), die im Wesentlichen senkrecht zu der ersten Achse ist, drehen kann;

   wobei die Struktur eine Elektrogeneratoreinrichtung aufweist, die funktionsmäßig mit dem ersten Rahmen zur Erzeugung elektrischer Energie als Folge einer Drehung des ersten Rahmens um die erste Achse (6) verbunden ist,
   wobei das Verfahren **dadurch gekennzeichnet ist, dass** eine Drehung des ersten Rahmens um die erste Achse in Abhängigkeit der Winkelposition des ersten Rahmens derart gesteuert wird, dass der erste Rahmen vollständige Drehungen um 360° um die erste Achse in ein und derselben Drehrichtung ausführt.

8. System zur Erzeugung elektrischer Energie aus Meereswellen mit einem Schwimmkörper und einer daran angebrachten Kreiselstruktur (4) gemäß einem der Ansprüche 1 bis 6.

9. System nach Anspruch 8, wobei die Aktuatoreinrichtung ausgebildet ist, die Drehbewegung des ersten Rahmens mit der Schwingungsbewegung des Schwimmkörpers, die durch die Meereswellen hervorgerufen wird, so zu synchronisieren, dass in jeder Schwingungsperiode des Schwimmkörpers das hervorgerufene Kreisel-Drehmoment ($\vec{T}$) insgesamt stets Nutzarbeit und ausschließlich in der gleichen Drehrichtung erzeugt.

10. System nach Anspruch 8 oder 9, wobei die Aktuatoreinrichtung ausgebildet ist, die Drehbewegung des ersten Rahmens mit der Schwingungsbewegung des Schwimmkörpers, die durch die Meereswellen hervorgerufen wird, derart zu synchronisieren, dass das hervorgerufene Kreisel-Drehmoment ($\vec{T}$) stets ausschließlich gleichsinnig zu der Drehbewegung des ersten Rahmens gehalten wird.

**Revendications**

1. Structure de gyroscope (6) pour générer de l'énergie électrique, comprenant :

- un premier châssis (7) qui peut être monté de façon à ce qu'il puisse tourner autour d'un premier axe de rotation (7') ; et
- un rotor (16) monté de façon à ce qu'il puisse tourner sur ledit premier châssis autour d'un second axe de rotation (15') essentiellement perpendiculaire audit premier axe ;

ladite structure ayant des moyens générateurs d'électricité reliés de manière opérationnelle audit premier châssis pour générer de l'énergie électrique comme résultat de la rotation dudit premier châssis autour dudit premier axe (6),

ladite structure étant **caractérisée en ce qu'**elle comprend des moyens d'actionnement conçus pour commander la rotation dudit premier châssis autour dudit premier axe, en fonction de la position angulaire dudit premier châssis, de manière telle que ledit premier châssis effectuera, quand il est en opération, des rotations complètes de 360° autour dudit premier axe, suivant la seule et même direction de rotation.

2. Structure selon la revendication 1, dans laquelle lesdits moyens d'actionnement sont conçus pour exercer un couple sur ledit premier châssis qui est concordant ou discordant par rapport audit mouvement de rotation dudit premier châssis, en fonction de la position angulaire dudit premier châssis.

3. Structure selon l'une quelconque des revendications 1 à 2, dans laquelle lesdits moyens d'actionnement sont conçus pour commander la rotation dudit premier châssis de sorte que le couple gyroscopique $(\vec{T})$ induit par la structure produira dans son ensemble un travail utile toujours et uniquement dans la même direction de rotation.

4. Structure selon l'une quelconque des revendications précédentes 1 à 3, dans laquelle lesdits moyens d'actionnement sont conçus pour commander la rotation dudit premier châssis de sorte que le couple gyroscopique $(\vec{T})$ induit par la structure est maintenu toujours et uniquement concordant avec le mouvement de rotation du premier châssis.

5. Structure selon l'une quelconque des revendications 1 à 4, dans laquelle lesdits moyens d'actionnement comprennent :

- une unité de commande (32) ; et
- un capteur (34) relié à ladite unité de commande et conçu pour détecter la position angulaire dudit premier châssis ;

ladite unité de commande étant fournie pour faire commuter le mode d'opération desdits moyens générateurs en un mode d'opération de moteur, en fonction de la position angulaire dudit premier châssis, de manière telle que lesdits moyens générateurs exerceront un couple sur ledit premier châssis qui est concordant ou discordant par rapport audit mouvement de rotation dudit premier châssis, en fonction de la position angulaire dudit premier châssis.

6. Structure selon l'une quelconque des revendications 1 à 4, dans laquelle lesdits moyens d'actionnement comprennent une manivelle (22), reliée en rotation au premier châssis, et deux ressorts (24, 26) configurés aux côtés opposés de la manivelle, lesdits ressorts ayant chacun une première extrémité (24', 26'), qui est reliée à ladite manivelle, et une seconde extrémité (24", 26"), opposée à ladite première extrémité, qui est pivotée autour d'un axe respectif d'oscillation parallèle à l'axe de manivelle, dans laquelle les axes respectifs d'oscillation des secondes extrémités desdits ressorts reposent dans un seul et même plan contenant également l'axe de manivelle, à des positions respectives qui sont opposées l'une à l'autre et équidistantes à partir dudit axe de manivelle.

7. Procédé pour l'opération d'une structure de gyroscope du type comprenant :

- un premier châssis (7) qui peut être monté de façon à ce qu'il puisse tourner autour d'un premier axe de rotation (7') ;
- un rotor (16), qui est monté de façon à ce qu'il puisse tourner sur ledit premier châssis autour d'un second axe de rotation (15') essentiellement perpendiculaire audit premier axe ;

ladite structure ayant des moyens générateurs d'électricité reliés de manière opérationnelle audit premier châssis pour générer de l'énergie électrique comme résultat de la rotation dudit premier châssis autour dudit premier axe (6),

ledit procédé étant **caractérisé en ce qu'**il envisage la commande de la rotation dudit premier châssis autour dudit premier axe en fonction de la position angulaire dudit premier châssis, de sorte que ledit premier châssis effectuera des rotations complètes de 360° autour dudit premier axe, suivant la seule et même direction de rotation.

8. Système pour générer de l'énergie électrique à partir de vagues maritimes comprenant un corps flottant et une structure de gyroscope (4) configurée sur celui-ci selon l'une quelconque des revendications 1 à 6.

9. Système selon la revendication 8, dans lequel lesdits moyens d'actionnement sont conçus pour synchroniser le mouvement de rotation du premier châssis au mouvement d'oscillation du corps flottant, généré par les vagues maritimes, de sorte que, dans chaque cycle d'oscillation du corps flottant, le couple gyroscopique $(\vec{T})$ induit produira dans son ensemble un travail utile toujours et uniquement dans la même direction de rotation.

**10.** Système selon la revendication 8 ou 9, dans lequel lesdits moyens d'actionnement sont conçus pour synchroniser le mouvement de rotation du premier châssis au mouvement d'oscillation du corps flottant, généré par les vagues maritimes, de sorte que le couple gyroscopique $(\vec{T})$ induit soit maintenu toujours et uniquement concordant avec le mouvement de rotation du premier châssis.

FIG. 1

FIG. 2

FIG. 3

FIG. 4A

FIG. 4B

FIG. 4D

FIG. 4C

FIG. 4F

FIG. 4E

FIG. 5A   FIG. 5B   FIG. 5C

FIG. 5D   FIG. 5E   FIG. 5F

EP 2 764 236 B1

## FIG. 6

## FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4352023 A
- US 20090322080 A